(19) Europäisches Patentamt
European Patent Office
Office européen des brevets

(11) EP 1 281 733 B1

(12) # EUROPÄISCHE PATENTSCHRIFT

(45) Veröffentlichungstag und Bekanntmachung des Hinweises auf die Patenterteilung:
**01.08.2007 Patentblatt 2007/31**

(21) Anmeldenummer: **02012874.0**

(22) Anmeldetag: **11.06.2002**

(51) Int Cl.:
*C09C 1/30* $^{(2006.01)}$
*C01B 33/193* $^{(2006.01)}$
*B01D 19/04* $^{(2006.01)}$
*B01J 2/30* $^{(2006.01)}$
*C08K 3/36* $^{(2006.01)}$
*B60C 1/00* $^{(2006.01)}$
*C09K 3/10* $^{(2006.01)}$
*A01N 59/00* $^{(2006.01)}$

(54) **Hydrophobe, nicht getemperte Fällungskiesels-ure mit hohem Weissgrad**

Hydrophobic not annealed precipitated silica with high whiteness

Silice de précipitation hydrophobe non recuite ayant un degré de blancheur élevé

(84) Benannte Vertragsstaaten:
**AT BE CH CY DE DK ES FI FR GB GR IE IT LI LU MC NL PT SE TR**

(30) Priorität: **04.08.2001 DE 10138492**

(43) Veröffentlichungstag der Anmeldung:
**05.02.2003 Patentblatt 2003/06**

(73) Patentinhaber: **Degussa GmbH**
**40474 Düsseldorf (DE)**

(72) Erfinder:
- **Panz, Christian, Dr.**
  **50389 Wesseling (DE)**
- **Schmoll, Ralf, Dr.**
  **53125 Bonn (DE)**
- **Kempf, Michael**
  **63517 Rodenbach (DE)**
- **Scholz, Mario, Dr.**
  **63584 Gründau (DE)**

(56) Entgegenhaltungen:
**EP-A- 0 340 129**
**EP-A- 0 367 934**
**WO-A-01/12731**
**GB-A- 813 453**
**US-A- 3 334 062**
**US-A- 3 830 738**
**US-A- 4 849 022**
**US-A- 5 959 005**
**US-B1- 6 197 384**

- **"CHEMICAL ABSTRACTS + INDEXES, AMERICAN CHEMICAL SOCIETY. COLUMBUS, US" CHEMICAL ABSTRACTS + INDEXES, AMERICAN CHEMICAL SOCIETY. COLUMBUS, US, XP000121954 ISSN: 0009-2258**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 281 733 B1

Printed by Jouve, 75001 PARIS (FR)

## Beschreibung

Die Erfindung betrifft eine hydrophobe Fällungskieselsäure die ohne Temperung hergestellt wird, einen hohen Weißgrad besitzt und sich gut in Silikonkautschukformulierungen einarbeiten läßt und eine hohe Verstärkungswirkung in den Silikon-Vulkanisaten bewirkt.

Die Behandlung feinverteilter Feststoffe, Metalloxide und Silikate mit siliciumorganischen Verbindungen, wie Organopolysiloxanen ist z. B. zum Beispiel aus DE 30 85 905 bekannt. Der hierin durchgeführte Temperungsprozeß wird unter Stickstoffinertisierung durchgeführt. Weiterhin sind hydrophobe Silikate zum Beispiel aus DE 24 35 860, DE 22 42 728 und DE 25 13 608 bekannt.

In diesen Schriften werden hydrophile Silikate und Fällungskieselsäuren hydrophobiert, indem eine Umsetzung der Silikate und Fällungskieselsäuren mit siliziumorganischen Verbindungen erfolgt. Als Hydrophobierungsmittel werden z.B. Organohalogensilane bzw. Organopolysiloxanverbindungen eingesetzt.

In DE 26 28 975 und DE 27 29 244 wird die Herstellung von hydrophoben Kieselsäuren beschrieben, in dem eine hydrophile Fällungskieselsäure mit geringer Wasseraufnahmefähigkeit mit Silikonöl bzw. Dimethyldichlorsilan umgesetzt wird. Im Verfahren gemäß DE 26 28 975 erfolgt die Umsetzung, indem das Hydrophobierungsmittel (Silikonöl) der trockenen Fällungskieselsäure zugesetzt wird, im Verfahren nach DE 27 29 244 wird das Hydrophobierungsmittel (Dimethyldichlorsilan) direkt in die Fällungskieselsäuresuspension gegeben. In beiden Fällen schließt sich nach dem Hydrophobierungsschritt eine Temperung bei erhöhten Temperaturen, das heißt zwischen 200 und 400 °C an.

Nachteilig bei diesem Verfahren ist, dass sich die auf diese Weise hydrophobierte Fällungskieselsäure bei den erforderlichen Prozeß-Temperaturen verfärbt. Die Verfärbung der Kieselsäure macht sich besonders störend bei der Zugabe zu Silikonformulierungen bemerkbar, d.h. bei der Zugabe dieser hydrophoben Fällungskieselsäuren zu Silikonkautschukformulierungen oder in silikonölbasierenden Entschäumermischungen.

Ein weiterer Nachteil der Temperung bei Temperaturen von 200 - 400 °C ist, dass dieser Prozess relativ kostenintensiv ist und so die hydrophobierte Kieselsäure vergleichsweise teuer macht.

Als Maß der Verfärbung kann der sogenannte Remissionswert dienen. Bei der Remissionsmessung wird das diffuse Reflexionsvermögen einer Probe untersucht. Je höher das diffuse Reflexionsvermögen einer Probe, desto höher ist ihr Remissionswert und damit der Weißgrad der Probe.

Fällungskieselsäuren haben in der Regel einen Remissionswert von maximal 97 %. Eine Aufgabe der vorliegenden Erfindung ist es daher, eine Hydrophobierung von Kieselsäuren so durchzuführen, dass der Remissionswert der ursprünglichen Kieselsäure im Idealfall erhalten bleibt.

Aufgabe der vorliegenden Erfindung war es daher, eine hydrophobe Fällungskieselsäure bereitzustellen, die einen hohen Weißgrad aufweist, sich gut in Silikonkautschukformulierungen einarbeiten läßt, und im Silikonkautschuk gute Verstärkungseigenschaften zeigt.

Überraschenderweise wurde gefunden, dass eine hydrophobe Kieselsäure mit den geforderten Eigenschaften durch Auftragen eines Polysiloxans auf eine hydrophile Fällungskieselsäure mit anschließender Konditionierung erhalten werden kann.

Gegenstand der vorliegenden Erfindung sind daher hydrophobe Fällungskieselsäuren gekennzeichnet durch die folgenden Eigenschaften:

| | |
|---|---|
| - Kohlenstoffgehalt | 1,0 - 8 %, bevorzugt 2 - 6 % |
| - Methanolbenetzbarkeit | 20 - 55 % |
| - Remissionswert | > 94 % |
| - Verhältnis von BET/CTAB | ≤ 1 |
| - DBP-Aufnahme | < 250 g/100 g, bevorzugt 200 g/100g |
| - BET-Oberfläche | 50 - 110 $m^2/g$ |
| - CTAB-Oberfäche | 100 - 150 $m^2/g$ |
| - Searszahl | < 13. |

Die genannten Vorzugsbereiche können unabhängig voneinander eingestellt werden.

Die erfindungsgemäße Kieselsäure besitzt den Vorteil, dass handelsübliche, hydrophile Fällungskieselsäuren mit preisgünstigen Polysiloxanderivaten bei Temperaturen < 200 °C hydrophobiert werden können und daher deutlich preisgünstiger als die durch Temperung hergestellten, hydrophoben Kieselsäuren produziert werden kann. Im Temperaturbereich < 200 °C treten mit den verwendeten Polysiloxanderivaten keinerlei Verfärbungserscheinungen auf.

Die erfindungsgemäßen hydrophoben Kieselsäuren können weiterhin jeweils unabhängig voneinander durch die folgenden Eigenschaften gekennzeichnet sein

| | |
|---|---|
| -pH-Wert | 5-9 |
| - Wassergehalt | < 7 % |
| - Leitfähigkeit | < 200 μS |
| - Glühverlust | 3-14 % |

Die Leitfähigkeit kann unter 150, 100, 60, oder sogar unter 40 μS liegen.

Weiterhin ist Gegenstand der vorliegenden Erfindung ein Verfahren zur Herstellung von hydrophoben Fällungskieselsäuren, gekennzeichnet durch die folgenden Schritte:

a) Herstellung einer Mischung aus einem Organopolysiloxanderivat und einer Fällungskieselsäure und

b) Durchführung einer Konditionierung der Mischung wird für einen Zeitraum von 0,5 bis 72 h bei 10 bis 150 °C.

Bevorzugt erfolgt Verfahrensschritt b) durch eine 0,5 bis 2-stündige Wärmebehandlung bei 100 bis 150 °C oder durch eine Lagerung bei Raumtemperatur (10 - 30 °C) für die Dauer von mindestens 48 h.

Die erfindungsgemäße hydrophobe Fällungskieselsäure zeichnet sich durch die folgenden Eigenschaften aus:

- einen außergewöhnlich hohen Weißgrad (Remission über 94 %)
- auch bei Temperaturen bis 200 °C sind keine Verfärbungserscheinungen zu beobachten
- eine sehr homogene Hydrophobierung, das heißt eine steile Methanolbenetzbarkeitskurve
- Methanolbenetzbarkeiten von 20 - 55 %
- gute Einarbeitbarkeit in Silikonkautschukformulierungen
- enthält kaum ionischen Verunreinigungen, d. h. niedrige Leitfähigkeit
- enthält keine Tenside, Emulgatoren oder organische Lösungsmittel, die zur Verfärbung bei erhöhten Temperaturen führen können.
- Stabilität gegenüber wässrigen Medien (keine Abspaltung von Hydrophobierungsmitteln)

Das Verfahren zur Herstellung der erfindungsgemäßen Kieselsäure ermöglicht es, ohne den Einsatz von Lösungsmitteln (außer Wasser), Emulgatoren, Tensiden oder anderer oberflächenaktiven Molekülteile im Hydrophobierungsmittel auszukommen und trotzdem eine homogene Verteilung des Hydrophobierungsmittel zu erhalten, so dass diese Kieselsäure niedrigverdickende Eigenschaften mit Verfärbungsfreiheit verbindet.

Die gute Verteilung des Hydrophobierungsmittels und die homogene Hydrophobierung der erfindungsgemäßen Fällungskieselsäure bewirken in Silikonkautschukformulierungen eine gute Einarbeitbarkeit der Kieselsäure bei gleichzeitig guten mechanischen und optischen Eigenschaften der Vulkanisate.

Die erfindungsgemäße Kieselsäure wird vorzugsweise mit einem Polysiloxan behandelt, dass als organische Reste überwiegend Methylgruppen enthält, was mit zu einer hohen thermischen Belastbarkeit führt (Temperaturen bis 200 °C führen zu keinerlei Verfärbungserscheinungen)

Die für eine Fällungskieselsäure niedrige Wasseraufnahme der erfindungsgemäßen, hydrophoben Fällungskieselsäure wird durch die Auswahl einer hydrophilen Fällungskieselsäure sehr niedriger Silanolgruppendichte und durch eine sehr homogene Hydrophobierung mit siliziumorganischen Verbindungen ermöglicht. Als Maß für die Silanolgruppendichte dient die Searszahl, deren Messung in den Beispielen definiert ist.

Die Verwendung von flüssigen Polysiloxan, bevorzugt Polydimethylsiloxan von vorzugsweise 30-100 cSt ermöglicht eine optimale Verteilung auf der Kieselsäureoberfläche.

Polydimethylsiloxane dieses Viskositätsbereiches sind einerseits noch dünnflüssig genug um sich gut auf der Kieselsäure zu verteilen, andererseits aber schon groß genug, um sich durch multible Wasserstoffbrückenbindungen zwischen den Silanolgruppen der Kieselsäure und den Siloxanbrücken der Siloxanmoleküle fest an die Kieselsäureoberfläche zu binden.

Der Verlauf der Methanolbenetzbarkeit, d.h. Methanolkonzentration vs. Sedimentbildung ist ein Maß für eine homogene Hydrophobierung.

Erfindungsgemäße konditionierte Kieselsäuren zeigen eine steile Methanolbenetzbarkeit, d. h. es handelt sich hier um eine homogene Hydrophobierung (Fig. 1). Fig. 2 zeigt eine Methanolbenetzbarkeit von üblichen hydrophoben Kieselsäuren, bei welchen das Organopolysiloxanderivat ohne Konditionierung auf der Kieselsäure verteilt wurde.

Die erfindungsgemäße hydrophobe Fällungskieselsäure kann daher in folgenden Anwendungen eingesetzt werden:

1. Als Füllstoff in Silikonkautschukformulierungen in LSR-, HTV- und RTV-Silikonen.

2. Als Entschäumerkomponente
Es ist z. B. aus DE 28 29 906, US 4 377 493, DE 34 11 759, US 4 344 858 und WO 95/05880 bekannt, dass hydrophobierte Kieselsäuren in Entschäumerformulierungen eingesetzt werden können. Hier ist eine gewisse Hydrophobie und eine -auch für größere Moleküle- gut zugängliche große Oberfläche der erfindungsgemäßen Kieselsäure für eine hohe Entschäumerleistung vorteilhaft.
Die hohen Remissionswerte der erfindungsgemäßen Kieselsäuren sorgen für ansprechende, verfärbungsfreie Entschäumerformulierungen, besonders in Formulierungen auf der Basis von Mineral- und Silikonöl.

3. Als Free-Flow Mittel
Es ist bekannt, (z.B. Schriftenreihe Degussa AG Fällungskieselsäure und Silikate, 1984) dass hydrophobierte Kieselsäuren als Free-Flow-Hilfsmittel verwendet werden können. Aufgrund der niedrigen Wasseraufnahme ist die erfindungsgemäße Kieselsäure besonders gut als Free-Flow-Hilfsmittel für hydrolyseempfindliche Stoffe geeignet. Die hohen Remissionswerte der erfindungsgemäßen Kieselsäuren stellen auch hier einen zusätzlichen Vorteil dar.

Weiterhin kann die erfindungsgemäße Kieselsäure als Trägersubstanz, insbesondere für Insektizide, als Insektizid als solches, als Antiblocking-Hilfsmittel, als Füllstoff in Reifen oder als Emulgationshilfsmittel verwendet werden.
Die Herstellung der hydrophoben Fällungskieselsäuren erfolgt in 2 Schritten:

- Zunächst erfolgt die physikalische Vorverteilung eines flüssigen Polysiloxanderivates auf der Kieselsäureoberfläche. Wird die Vorverteilung in wässrigen Medien, d. h. Suspensionen oder Kieselsäure mit einem Wassergehalt über 70 % durchgeführt, dann ist diese typischerweise nicht beständig. Es muß daher nach der Vorverteilung schnell abfiltriert und/oder eine Kurzzeittrocknung (z. B. Spin-Flash-, Düsenturm-Trockner) durchgeführt werden. Dies führt zu einer Konservierung der Verteilung der Organopolysiloxantröpfchen auf der Kieselsäure und verhindert die Entmischung in Wasser, Silikonöl und Kieselsäure.
- Anschließend wird durch einen gezielten Konditionierungschritt Verfahrensschritt b) die Verteilung des Hydrophobierungsmittels weiter verbessert und ein Aufziehen des Polysiloxanderivates auf der Kieselsäureoberfläche erreicht. Die Verteilung ist auch in wässrigen Medien stabil. Das Polysiloxanderviat trennt sich nach dem Verfahrensschritt b) nicht mehr von der Kieselsäure ab. Die so konditionierten Kieselsäuren lassen sich bei Kohlenstoffgehalten ≥ 3,1 stufenlos auf eine Methanolbenetzbarkeit bis zu 55 % einstellen. Das BET/CTAB-Verhältnis ist nach diesem Verfahrensschritt < 1. Die Anbindung des Polysiloxans an die Kieselsäure erfolgt vermutlich durch die Ausbildung multibler Wasserstoffbrückenbindungen zwischen den Siloxanbrücken der Polysiloxanmoleküle und den Silanolgruppen der Kieselsäureoberfläche.

Als Organopolysiloxanderivat können alle Organosilane oder Organohalogensilane eingesetzt werden, die üblicherweise zur Hydrophobierung von Fällungskieselsäuren verwendet werden.
Verfahrensschritt a) des erfindungsgemäßen Verfahrens kann mit den folgenden Varianten durchgeführt werden:

- Zugabe von Organopolysiloxanderivat auf eine Fällungskieselsäure mit einem Wassergehalt von 1 bis 80 Gew.-%, bevorzugt 20 bis 60 Gew.-%.
- Zugabe des Organopolysiloxanderivats in eine Dispersion der Fällungskieselsäure, d. h. nach erfolgter Fällung von Silikat mit einer Säure z. B. mit einem Rhein-Hütte-Mischer oder Kolthof-Mischsirene oder Ultra-Turrax. Dies erfordert eine rasche Filtration bzw. eine Kurzzeit-Trocknung nach der Umsetzung.
- Zugabe des Organopolysiloxanderivats auf eine Fällungskieselsäure mit einem Wassergehalt von 70 bis 99 Gew.-% bei anschließender Trennung des Feststoffs vom Wasser. Die Trennung kann durch Filtration, Spin-flash-Trocknung oder eine sonstige Kurzzeit-Trocknung (z. B. mit Hilfe eines Sprühtrockners oder Düsenturm-Trockners) erfolgen. Je höher der Wassergehalt, desto rascher sollte die Trennung durchgeführt werden. Eine Entmischung ist zu vermeiden.
- Gleichzeitiges Zuführen der Fällungskiesel- bzw. wasserhaltigen Kieselsäure oder der Kieselsäurensuspension und des Organopolysiloxanderivats in einen Spin-Flash-Trockner.
- Mischen von trockener Fällungskieselsäure mit Polysiloxan, z. B. in einem Gericke-Mischer.

Alternativ kann zunächst ein Masterbatch, d.h. eine konditionierte Fällungskieselsäure, erhalten nach den Verfahrensschritten a) und b) hergestellt und mit einer (hydrophilen) bzw. wasserhaltigen Fällungskieselsäure gemischt werden.
Der Wassergehalt der hydrophilen Fällungskieselsäure kann in den bereits genannten Bereichen schwanken.
Die Basis-Kieselsäure kann z. B. im Massenverhältnis 1:1 bis 1:3 mit Silikonöl z. B. DOW CORNING (R) 200 FLUID 50 CS (Dimethylpolysiloxan 50 mPas, mit Trimethysilyl-Gruppen terminiert, Kohlenstoffgehalt ca. 33 %) belegt

werden (Schritt a)). Das so entstandene Pulver wird z. B. über eine halbe Stunde bei einer Temperatur von über 100 °C konditioniert. Die Konditionierung (Schritt b) wird hier so lange durchgeführt, bis ein Material entstanden ist, das zwar wasserbenetzbar (Methanolbenetzbarkeit < 20, zur Definition der Methanolbenetzbarkeit siehe Meßverfahren) ist, bei dem sich jedoch Kieselsäure und Silikonöl beim Eintrag in Wasser nicht mehr voneinander trennen (wenn sich nach Schritt b) unmittelbar Schritt c) anschließt, dann wird eine Methanolbenetzbarkeit > 20 bevorzugt). Durch Mischen dieses Masterbatches (z. B. 50 Gew.-% Kieselsäure und 50 Gew.-% Silikonöl) mit wässrigen Kieselsäuredispersionen oder Kieselsäuresuspensionen entstehen stabile Mischungen, bei denen sich das Silikonöl nicht mehr von der Kieselsäure abtrennt. Die Gesamtmischung enthält typischerweise 1 Gewichtsteil Silikonöl, ca. 4-8 Gewichtsteile Kieselsäure und 20-60 Gewichtsteile Wasser. Zur Herstellung einer solchen Suspension kann z. B. der Masterbatch (z. B. 50 % Kieselsäure und 50 % Silikonöl) mit ca. der 10-16-fachen Menge an Filterkuchen (Feststoffgehalt ca. 20 %) und ca. der 10-20-fachen Menge an zusätzlichem Wasser intensiv gemischt werden. Der Vorteil dieser Vorgehensweise besteht darin, dass sich der wasserbenetzbare Masterbatch (der bis zu 75 % an hydrophoben Organopolysiloxan enthält!) direkt in Kieselsäurefällsuspensionen oder Kieselsäurespeisen sehr fein und stabil verteilen läßt, ohne daß der Einsatz von Emulgatoren oder Tensiden erforderlich ist. Nach Trocknung oder Filtration und anschließender Trocknung einer solchen Mischung kann die so erhaltene organopolysiloxanhaltige Kieselsäure erneut konditioniert werden (Schritt b).

Diese Schritte können einzeln, ggf. mit einer vorhergehenden Vermahlung durchgeführt werden. Die Vermahlung sollte jedoch nicht vor der Belegung a) durchgeführt werden. Es ist auch möglich, mehrere, d. h. gleiche oder unterschiedliche dieser Varianten nacheinander durchzuführen. Es sind folgende Ausführungsformen des erfindungsgemäßen Verfahrens denkbar:

- Einer der Verfahrensschritte a) oder b) wird mehrmals (2 bis 5 mal) hintereinander ausgeführt.
- Die Verfahrensschritte a) und b) werden mehrmals (2 bis 5 mal) hintereinander durchgeführt, .d. h. der Prozess wird mehrmals durchlaufen.

Verfahrensschritt b) wird bevorzugt durch eine Wärmebehandlung von 100- 150 °C innerhalb von 0,5 bis 2 Stunden durchgeführt. Nach der Konditionierung kann eine teilhydrophobierte Kieselsäure mit einer Methanolbenetzbarkeit von 20 % und mehr vorliegen. Grundsätzlich kann zwischen Naß- und Trockenhydrophobierung unterschieden werden.

Naßhydrophobierung bedeutet, dass es sich bei den silikatischen Edukten um wässrige Kieselsäuresuspensionen, Kieselsäurespeisen oder stark wasserhaltige Kieselsäurefilterkuchen handelt, die mit den entsprechenden Hydrophobierungsmitteln belegt werden, wie es z. B. in DE 27 29 244 für Fällungssuspensionen mit Organohalogensilanen beschrieben wird.

Trockenhydrophobierung bedeutet, dass es sich bei den silikatischen Edukten um Kieselsäurepulver mit verschiedenen Feuchtigkeitsgehalten von 1 bis 75 % handelt, die mit den entsprechenden Hydrophobierungsmitteln belegt werden. Dieses Verfahren wird z. B. in DE 26 28 975 beschrieben.

Für die Herstellung der erfindungsgemäßen Kieselsäure werden Organopolysiloxanderivate eingesetzt; es können jedoch auch andere Siliziumverbindungen verwendet werden, die unter den gewählten Reaktionsbedingungen zu Organopolysiloxanen reagieren (z. B. Dichlordimethylsilan in wässriger Umgebung).

Als Hydrophobierungsreagenzien dienen Organopolysiloxanderivate oder deren Vorstufen, z. B. der Zusammensetzung $R_{4-n}SiX_n$ (mit n = 1, 2, 3), $[SiR_xX_yO]_z$ (mit $0 \le x \le 2$, $0 \le y \le 2$, $3 \le z \le 10$ mit x + y = 2), $[SiR_xX_yN]_z$ (mit $0 \le x \le 2$, $0 \le y \le 2$, $3 \le z \le 10$ mit x + y = 2), $SiR_nX_mOSiR_oX_p$ (mit $0 \le n \le 3$, $0 \le m \le 3$, $0 \le o \le 3$, $0 \le p \le 3$, mit n + m = 3, o + p = 3 ), $SiR_nX_mNSiR_oX_p$ (mit $0 \le n \le 3$, $0 \le m \le 3$, $0 \le o \le 3$, $0 \le p \le 3$, mit n + m = 3, o + p = 3 ), $SiR_nX_m[SiR_xX_yO]_zSiR_oX_p$ (mit $0 \le n \le 3$, $0 \le m \le 3$, $0 \le x \le 2$, $0 \le y \le 2$, $0 \le o \le 3$, $0 \le p \le 3$, $1 \le z \le 10000$ mit n + m = 3, x + y = 2, o + p = 3 ) verwenden. Bei diesen Verbindungen kann es sich um lineare, cyclische und verzweigte Silan- , Silazan und Siloxanverbindungen handeln. Bei R kann es sich um Alkyl und/oder Arylreste handeln, welche mit funktionellen Gruppen wie der Hydroxygruppe, der Aminogruppe, Polyethern wie Ethylenoxid und/oder Propylenoxid und Halogenidgruppen wie Fluorid substituiert sein können. R kann auch Gruppen wie Hydroxy-, Amino-, Halogenid-, Alkoxy- Alkenyl-, Alkinyl- und Aryl-Gruppen und schwefelhaltige Gruppen enthalten. Bei X kann es sich um reaktive Gruppen wie Silanol-, Amino-, Mercapto, Halogenid-, Alkoxy- Alkenyl-und Hydridgruppen handeln.

Bevorzugt werden lineare Polysiloxane der Zusammensetzung $SiR_nX_m[SiR_xX_yO]_zSiR_oX_p$ (mit $0 \le n \le 3$, $0 \le m \le 3$, $0 \le x \le 2$, $0 \le y \le 2$, $0 \le o \le 3$, $0 \le p \le 3$, $1 \le z \le 10000$ mit n + m = 3, x + y = 2, o + p = 3 ) verwendet, bei welchen R bevorzugt durch Methyl repräsentiert wird.

Besonders bevorzugt werden Polysiloxane der Zusammensetzung $SiR_nX_m[SiR_xX_yO]_zSiR_oX_p$ (mit $0 \le n \le 3$, $0 \le m \le 1$, $0 \le x \le 2$, $0 \le y \le 0, 2$, $0 \le o \le 3$, $0 \le p \le 1$, $1 \le z \le 1000$ mit n + m = 3, x + y = 2, o + p = 3 ) verwendet, bei welchen R bevorzugt durch Methyl repräsentiert wird. Aufgrund des gewählten, erfindungsgemäßen Verfahrens lassen sich aber speziell auch schwerflüchtige Polysiloxane einsetzten, die keine funktionellen Gruppen aufweisen.

Durch das Vorhandensein bestimmter funktioneller Gruppen in Polysiloxan können Salze oder niedermolekulare Stoffe wie $NH_3$, Amine Alkohole etc. entstehen, welche zu störenden Verunreinigungen führen können. Eine wichtige

Ausnahme stellen hier silanolfunktionalisierte Polysiloxane dar, da hier als Verunreinigung lediglich Wasser entsteht, das unter den gewählten Prozeßbedingungen leicht entfernbar ist.

Bevorzugt kann es sich bei dem Hydrophobierungsmittel um ein methylterminiertes Polydimethylsiloxan, insbesondere eines mit einer Viskosität von 30 - 100 mPas, bevorzugt 40 - 60 mPas handeln. Ein geeignetes Polysiloxanöl ist z. B. DOW CORNING (R) 200 FLUID 50 CS.

Da es sich bei den genannten Hydrophobierungsmitteln um schwerflüchtige Verbindungen handelt, spielen für die Vorverteilung der Hydrophobierungsmittel auf der Kieselsäureoberfläche Kapillarkräfte und Diffusionsvorgänge an der Flüssig/Fest-Phasengrenze eine wichtige Rolle.

Selbst wenn die bevorzugt eingesetzten Hydrophobierungsmittel im Verlauf einer thermischen Behandlung eine gewisse Flüchtigkeit aufweisen, ist die Flüssig/Fest-Verteilung trotzdem von Bedeutung. Aus diesem Grund wird hier zwischen physikalischer Vorverteilung, Konditionierung und Temperung unterschieden.

Optional wird die hydrophobierte Kieselsäure nach dem Konditionierungsschritt vermahlen. Eine Vermahlung vor dem Belegungsschritt a) ist nicht angezeigt und führt zu inhomogener Belegung und Hydrophobierung. Die Vermahlung wird bevorzugt zu einem Produkt mit einer mittleren Teilchengröße $d_{4,3}$ von 2 - 30 μm, besonders bevorzugt 8 - 15 μm, durchgeführt.

Die Verwendung der erfindungsgemäßen Fällungskieselsäuren als Füllstoff in Silikonkautschukformuierungen, Elastomeren, Polymeren, Reifen oder Dichtungsmassen, als Entschäumer, Trägersubstanz, Emulgierhilfsmittel, Antiblocking-Hilfsmittel, als Pigment, als Free-Flow-Hilfsmittel oder Insektizid ist ebenfalls Gegenstand dieser Erfindung.

Silikonkautschukformulierungen benötigen zur vollen Ausbildung ihrer mechanischen Eigenschaften aktive Verstärkerfüllstoffe. Dabei werden üblicherweise hochdisperse Kieselsäuren verwendet. Dabei muß der Verstärkerfüllstoff gute mechanische Eigenschaften im Vulkanisat bewirken und sich leicht in die Silikonkautschukformulierung einarbeiten lassen.

HTV- und LSR-Silikonkautschukformulierungen werden bei Temperaturen weit über 100 °C verarbeitet. Dabei können wasserhaltige Füllstoffe zu einer störenden Dampfblasenbildung in der Silikonformulierung führen. Deshalb stellt eine niedrige Feuchtigkeitsaufnahme wie in der erfindungsgemäßen Kieselsäure einen Vorteil in der Verarbeitbarkeit der Kieselsäure in diesen Silikonkautschukformulierungen dar.

Diese Eigenschaft leitet sich aus der Art der verwendeten Basiskieselsäure und der Art der Hydrophobierung ab. Bei der Basiskieselsäure handelt es sich bevorzugt um eine Fällungskieselsäure, die eine sehr niedrige Silanolgruppendichte (als Maß der Silanolgruppendichte dient das Verhältnis von Searszahl zu BET-Oberfläche) aufweist. Die niedrige Silanolgruppendichte der Basiskieselsäure drückt sich auch in einem niedrigen Glühverlust von 3,0 ± 0,5 - bei einer BET-Oberfläche von 150 - 170 $m^2/g$ - aus.

Für Silikonkautschukmischungen, die bei Temperaturen von fast 200 °C unter Luftzutritt verarbeitet werden, ist es wichtig, dass keine organischen Bestandteile auf der Kieselsäure sind, welche sich bei diesen Temperaturen unter Sauerstoffeinfluß verfärben können. Nun sind siliciumorganische Verbindungen, die ausschließlich Methyl-, Phenyl, Fluorkohlenstoff oder Fluorkohlenwasserstoffe als organische Reste enthalten, auch in Anwesenweit von atmosphärischem Sauerstoff, ausgesprochen temperaturstabil. Das erfindungsgemäße Verfahren ermöglicht es, diese Verfärbungen zu unterdrücken. Diese Verfärbungserscheinungen werden durch Remissionsmessungen mit einem optischen Meßverfahren, das auf diffuser Reflexion beruht, gemessen. Liegen die Remissionswerte von Kieselsäure > 94% erscheint der mit Kieselsäure gefüllte Silikonkautschuk-Compound rein weiß. Da die Brechungsindices von Kieselsäure und Silikonkautschuk nahe beieinander liegen, werden selbst kleinste Verunreinigungen und Verfärbungen der Füllstoffkieselsäure im Silikonkautschuk deutlich sichtbar. Eine Remission von 93 % führt bereits zu einer deutlichen, mit dem unbewaffneten Auge sichtbaren Verfärbung im Silikonkautschuk, obwohl das nicht eingearbeitete Kieselsäurepulver dem Betrachter rein weiß erscheint.

Vorzugsweise werden die erfindungsgemäßen hydrophoben Fällungskieselsäuren in Mengen von 5 bis 50 Gew.-% in Silikonkautschukformulierungen eingesetzt, vorzugsweise 10 % bis 40 Gew.-%, bezogen auf das Gesamtgewicht der zu Elastomeren härtbaren Massen, eingesetzt. Bei HTV-Organopolysiloxanelastomeren können bis zu 50 Gew.-% eingesetzt werden.

Selbstverständlich können die zu Elastomeren härtbaren Massen außer Diorganopolysiloxanen, die erfindungsgemäße hydrophobierte Fällungskieselsäure, Vernetzungsmitteln und Vernetzungskatalysatoren, gegebenenfalls herkömmlicherweise meist oder häufig in zu Elastomeren härtbaren Massen verwendete Füllstoffe, enthalten. Beispiele für solche Stoffe sind Füllstoffe mit einer Oberfläche unterhalb 50 $m^2/g$, wie Quarzmehl, Diatomeenerde, ferner Zikoniumsilikat und Calciumcarbonat, ferner unbehandeltes pyrogen erzeugtes Siliciumdioxid, organische Harze, wie Polyvinylchloridpulver, Organopolysiloxanharze, faserige Füllstoffe , wie Asbest, Glasfasern und organische Pigmente, lösliche Farbstoffe, Duftstoffe, Korrosionsinhibitoren, die Massen gegen den Einfluß von Wasser stabilisiernde Mittel, sowie Essigsäureanhydrid, die Härtung verzögernde Mittel wie Benzotriazol und Weichmacher, wie durch Trimethylsiloxygruppen endgeblockte Dimethylpolysiloxane.

Die angeführte Kombination physikalisch-chemischer Stoffdaten der erfindungsgemäßen hydrophoben Fällungskieselsäure führt zu einem ausgezeichneten Verstärkerfüllstoff. Der gegenüber den bekannten Fällungskieselsäuren deutlich herabgesetzte Gleichgewichts-Feuchtegehalt bringt Vorteile bei der Verarbeitung, z.B. bei der drucklosen Vulkanisation, bei der im Vergleich zum Einsatz der bekannten, hydratisierten Fällungskieselsäuren porenfreie Vulkanisate anfallen. Der optimal eingestellte pH-Wert und die niedrige DBP-Zahl führen zu spürbar verkürzten Weichwalzzeiten. Der niedrige Elektrolytgehalt in Kombination mit dem niedrigen Feuchtegehalt führt schließlich zu guten elektrischen Eigenschaften der Vulkanisate.

Die folgenden Beispiele sollen die vorliegende Erfindung näher erläutern, ohne ihren Umfang einzuschränken.

**Beispiele:**

Als silikatisches Edukt werden bevorzugt Fällungskieselsäuren eingesetzt, die eine sehr niedrige Silanolgruppendichte, d.h. eine niedriges Verhältnis Alkaliverbrauch/BET-Oberfäche, eine relativ hohe CTAB-Oberfläche bei annähernd gleicher BET-Oberfläche und einen hohen Weiß- und Reinheitsgrad besitzt.

**Herstellung - Basis - Kieselsäure**

In einem Reaktionsbehälter werden 50,0 $m^3$ Wasser vorgelegt. Langsam werden 9,2 $m^3$ Wasserglaslösung und 0,9 $m^3$ $H_2SO_4$ unter Rühren zu der Vorlage gegeben, wobei in der Mischung während der Zugabe ein alkalischer pH-Wert eingehalten wird. Nach Abschluß der Zugabe von Wasserglas und $H_2SO_4$ liegt der pH-Wert der erhaltenen Suspension im alkalischen Bereich. Die Suspension wird angesäuert, abfiltriert und mit entionisiertem Wasser gewaschen. Die Trocknung der hydrophilen Basiskieselsäure kann bevorzugt durch eine Kurzzeittrocknung erfolgen Die folgenden Daten beziehen sich auf die so erhaltene, getrocknete Fällungskieselsäure.

| | |
|---|---|
| BET-Oberfläche [$m^2$/g] | 150-170 |
| CTAB-Oberfläche [$m^2$/g] | 150-170 |
| Glühverlust bez. auf die 2h/105 C°getr. Subst. (DIN 55921) [%] pH-Wert 5% (Methanol.-wässr. Lsg.) (DIN 53200) 6 - 7 | 3 ± 0,5 |
| Leitfähigkeit (in 5 %iger wässriger Dispersion) [µS] | < 150 |
| Stampfdichte | > 250 g/L |

Die Mischung der Basis-Kieselsäure und des Polysiloxans werden bis zu einem bestimmten Kohlenstoffgehalt durchgeführt, d. h. das Mischungsverhältnis ergibt sich aus dem rechnerischen Verhältnis zur Einstellung des geforderten Kohlenstoffgehalts.

**1. Messverfahren**

**1.1 Methanolbenetzbarkeit**

Kieselsäuren, deren Oberflächen mit nicht hydrolisierbaren, organischen Gruppen modifiziert sind, werden meist von Wasser nicht benetzt.

Diese hydrophoben Kieselsäuren lassen sich jedoch von einem Methanol/Wasser-Gemisch benetzen. Der Anteil des Methanols an diesem Gemisch - in Gewichtsprozenten ausgedrückt - ist ein Mass für die Hydrophobie der modifizierten Kieselsäure. Je höher der Methanolanteil ist, desto besser ist die Substanz hydrophobiert.

**Durchführung der Bestimmung:**

In 6 Zentrifugengläser von 15 ml Inhalt werden jeweils 200 mg hydrophobe Kieselsäure oder Silikat eingewogen und jedes der Gläser mit 8 ml eines Methanol-Wasser-Gemisches steigender Methanolkonzentration versetzt. Die Methanolkonzentration der Gemische richtet sich nach der zu erwartenden Methanolbenetzbarkeit. Die Zentrifugenfläser werden dicht verschlossen und dann kräftig geschüttelt (10 auf- und Abwärtsbewegungen). Zur Abtrennung der benetzten Kieselsäure-Silikatanteile werden die Gläser dann 5 Minuten bei 2500 UpM zentriguiert. Die benetzten Anteile bilden einen Bodensatz, dessen Volumina an der Skala der Zentrifugengläser abgelesen werden. Die Sediment-Volumina werden in einer Grafik gegen die Methanol-Wasser-Gemisch-Konzentration aufgetragen. Diese einzelnen Meßpunkte ergeben eine Kurve, deren Lage und Steilheit den Hydrophobierungsgrad der untersuchten Probe charakterisiert.

**Geräte:**

Präzisionswaage
Zentrifuge
Zentrifugengläser, graduiert
Dispensetten

### 1.2 DBP-Aufnahme

Die DBP-Aufnahme (DBP-Zahl), die ein Mass für die Saugfähigkeit der Fällungskieselsäure ist, wird wie folgt bestimmt:

Die Bestimmung der Dibutylphthalat-Zahl erfolgt mit dem Brabender-Plastographen. Die DBP-Zahl ist ein Mass für die Saugfähigkeit bzw. das Aufnahmevermögen eines pulverförmigen Produktes an Flüssigkeit. Das Aufnahmevermögen ist abhängig vom Feuchtegehalt, der Körnung und Einwaage des untersuchten Materials.

#### Geräte und Reagenzien

Brabender-Plastograph mit Schreibvorrichtung Multi-Dosimat E 415 (50 l) der Firma Metrohm Dibutylphthalat.

#### Durchführung

12,5 g Kieselsäure werden in den Kneter des Brabender- Plastographen gegeben. Unter ständigem Mischen (Umlaufgeschwindigkeit der Kneterschaufeln 125 UpM) fliesst Dibutylphthalat mit einer Geschwindigkeit von 4 ml/Minute in die Mischung. Das Einmischen erfordert nur geringen Kraftbedarf. Gegen Ende der Bestimmung wird das Gemisch schlecht rieselfähig. Diese Tatsache dokumentiert sich in einem Anstieg des Kraftbedarfes, der auf einer Skala angezeigt wird. Bei einem Skalenausschlag von 300 wird die DBP-Dosierung automatisch abgeschaltet.

#### Auswertung

Die Dichte von DBP beträgt 1,047 g/ml. Die DBP-Aufnahme wird auf die wasserfreie, getrocknete Substanz bezogen. Bei Verwendung von Fällungskieselsäuren mit höheren Feuchtigkeitsgehalten ist, wenn diese Fällungskieselsäuren vor der Bestimmung der DBP-Zahl nicht getrocknet werden, der Wert mittels der Korrekturtabelle zu korrigieren.

**Korrekturtabelle für Dibutylphthalataufnahme - wasserfrei -**

| % Wasser | % Wasser | | | | |
|---|---|---|---|---|---|
| % Wasser | ,0 | ,2 | ,4 | ,6 | ,8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

Der Korrekturwert entsprechend dem Wassergehalt wird dem experimentell bestimmten DBP-Wert zu addiert; z. B. würde ein Wassergehalt von 5,8 % einen Zuschlag von 33 g/100g für die DBP-Aufnahme bedeuten.

### 1.3 Teilchengröße

Die Teilchengröße wird mit einem "Malvern Mastersizer" in Ethanol nach 5-minütiger Ultraschallbehandlung bestimmt. Die Messung erfolgt automatisch und liefert die mittlere Teilchengröße $d_{4.3}$ aus einer Volumenverteilung.

### 1.4 Bestimmung des Normfarbwertes $R_y$ nach DIN 5033

**Anwendung**

Mit dem Spektralphotometer Datacolor 3890 wird der Normfarbwert $R_y$ bei Kieselsäuren, Silikaten und Zeolithen (Pulver-Suspension) bestimmt.

**Durchführung der Bestimmung:**

Die Proben werden vor der Messung auf einen mittleren Teilchendurchmesser von 8 - 15 µm vermahlen und anschließend mit einer Pulverpresse zu einer Tablette verpreßt. Die benötigte Menge hängt von der Feinteiligkeit des Pulvers ab. Es wird soviel Pulver eingefüllt, dass das Gewinde des Pressenverschlusses den letzten Gang erreicht.
Dazu werden die Proben unter das Meßgerät gelegt und an dem Steuerungsrechner der Menüpunkt Weißgradmessung $R_y$ und $R_{460}$ ausgewählt. Nach der Eingabe der Probenbezeichnung wird die "Space"-Taste zum Start der Messung betätigt.
Nach der Eingabe des Speichercodes werden die Meßwerte ausgedruckt.
Die Ausrechnung der Werte erfolgt automatisch nach der Formel:

$$y = \sum_{400}^{700} S*(\lambda) * Y(\lambda) * R(\lambda)$$

wobei

Y ( λ) die Normspektralwertfunktion
S (λ) relative spektrale Strahlungsverteilung der Beleuchtungsquelle und
R ( λ) den spektralen Remissionsgrad der Probe bedeuten.

### 1.5 Bestimmung der Sears-Zahl von Kieselsäuren, Silikaten und hydrophoben Kieselsäuren

1. **Anwendung:**

Durch Titration mit 0.1 N KOH im Bereich von pH 6 bis pH 9 lassen sich freie OH-Gruppen erfassen.

2. **Geräte**

2.1 Präzisionswaage auf 0.01 g genau

2.2 Memotitrator DL 70, Fa. Mettler, ausgerüstet mit 10 ml und 20 ml Bürette, 1 pH-Elektrode sowie 1 Pumpe (z. B. NOUVAG-Pumpe, Typ SP 40/6)

2.3 Drucker

2.4 Titriergefäß 250 ml Fa. Mettler

2.5 Ultra-Turrax 8000-24000 UpM

2.6 Thermostatisiertes Wasserbad

2.7 2 Dispenser 10-100 ml zur Dosierung von Methanol bzw. entionisiertem Wasser

2.8 1 Dispenser 10-50 ml zur Dosierung von entionisiertem Wasser

2.9 1 Meßzylinder 100 ml

2.10 IKA Universalmühle M 20

3. **Reagenzien**

3.1 Methanol p.A.

3.2 Natriumchlorid-Lösung, (250 g NaCl p. A. in 1000 ml entionisiertem Wasser)

3.3 0.1 N Salzsäure

3.4 0.1 N Kalilauge

3.5 entionisiertes Wasser

3.6 Pufferlösungen pH 7 und pH 9

4. **Durchführung**

4.1 Probenvorbereitung
Ca. 10 g Probe werden 60 Sekunden in der IKA-Universalmühle M 20 gemahlen.
Wichtig: Da nur sehr fein vermahlene Proben zu reproduzierbaren Ergebnissen führen, müssen diese Bedingungen genau eingehalten werden.

4.2 Durchführung der Analyse

4.2.1 2,50 g der nach Punkt 4.1 vorbereiteten Probe in ein 250 ml Titriergefäß einwiegen

4.2.2 60 ml Methanol p.A. zudosieren.

4.2.3 Nach vollständiger Benetzung der Probe 40 ml entionisiertes Wasser zugeben.

4.2.4 Mittels Ultra Turrax 30 Sekunden bei einer Drehzahl von ca. 18000 UpM dispergieren.

4.2.5 Mit 100 ml entionisiertem Wasser die am Gefäßrand und Rührer anhaftenden Probepartikel in die Suspension spülen.

4.2.6 Probe in einem thermostatisiertem Wasserbad auf 25 °C temperieren (mindestens 20 Minuten).

4.2.7 pH-Elektrode mit den Pufferlösungen pH 7 und pH 9 kalibrieren.

4.2.8 Probe wird nach der Methode S 911 im Memotitrator DL 70 titriert. Bei nicht eindeutigem Titrationsverlauf wird nachträglich eine Doppelbestimmung durchgeführt.

Als Ergebnisse werden ausgedruckt:
pH

$V_1$ in ml/5 g
$V_2$ in ml/5 g

5. **Berechnung:**

$$V_1 = \frac{V * 5}{E}$$

$$V_2 = \frac{V * 5}{E}$$

$V_1$ = ml KOH bzw. ml HCl bis pH 6 / 5 g Substanz
$V_2$ = ml KOH-Verbrauch bis pH 9 / 5 g Substanz
E = Einwaage

**Prinzip:**

Zunächst wird der Ausgangs-pH-Wert der Suspension gemessen, danach wird je nach Ergebnis mit KOH bzw. HCl der pH-Wert auf 6 eingestellt. Danach werden 20 ml NaCl-Lösung zudosiert. Mit 0.1 N KOH wird dann die Titration bis zum pH-Wert 9 fortgesetzt.

Sears-Zahlen

$$Si-OH + NaCl \Rightarrow Si-ONa + HCl$$

$$HCl + KOH \Rightarrow KCl + H_2O$$

**1.6 Bestimmung der Stampfdichte in Anlehnung an DIN/ISO 787/11**

**Durchführung der Bestimmung:**

10 g der zu untersuchenden Probe werden auf der Präzisionswaage auf 0,01 g genau abgewogen und in den graduierten 250 ml Glaszylinder des Stampfvolumens eingefüllt. Nach 1250 Stampfungen wird das Volumen des gestampften Materials abgelesen.

**Berechnung:**

Stampfdichte: $g/l = \frac{E \bullet 1000}{I}$

Das Stampfvolumen entspricht dem abgelesenen Wert.
E = Einwaage in g
I = Inhalt in ml

**Geräte:**

Präzisionswaage

| | |
|---|---|
| Stampfvolumeter | Fa. Engelsmann, Ludwigshafen |
| 250 ml Glaszylinder graduiert | Fa. Engelsmann, Ludwigshafen |

**Anmerkungen:**

In Sonderfällen kann das Material vor dem Einwiegen durch ein 500 µm-Sieb abgesiebt bzw. die Einwaage erhöht werden. Dieses muß im Prüfbericht angegeben werden.

### 1.7 Bestimmung der CTAB-Oberfläche

**1. Anwendung**

Die Methode beruht auf der Adsorption von CTAB (N-Cetyl-N,N,N-trimethylammoniumbromid) an der "äußeren" Oberfläche, die auch als "kautschukwirksame Oberfläche" bezeichnet wird.
Die Adsorption von CTAB erfolgt in wässriger Lösung bei pH = 9 unter Rühren und Ultraschallbehandlung. Überschüssiges, nicht adsorbiertes CTAB wird durch Rücktitration mit NDSS (Dioctylnatriumsulfosuccinat-Lösung) mit einem Titroprozessor ermittelt, wobei der Endpunkt durch das Maximum der Trübung der Lösung gegeben ist und mit einer Phototrode bestimmt wird.
Für die Berechnung wird ein Platzbedarf von 0.35 $nm^2$ pro CTAB-Molekül angenommen.
Die Bestimmung erfolgt in Anlehnung an ASTM 3765.
Bei jeder Meßreihe ist eine Standardprobe der Kieselsäure Typ VN 3 mit zu prüfen.

**2. Reaktionsgleichung: (Rücktitration)**

$$\underset{NDSS}{R_1{-}SO_3^-} + \underset{CTAB}{{}^+N(CH_3)_3R_2} \longrightarrow R_1SO_3N(CH_3)_3R_2$$

**3. Geräte:**

3.1 Mühle, z. B. Fabrikat IKA, Typ: M 20

3.2 Analylsenwaage

3.3 Magnetrührer

3.4 Magnetrührstäbchen

3.5 Titroprozessor, z. B. METTLER, Typ DL 55 oder DL 70, ausgerüstet mit:
pH-Elektrode, z. B. Fabrikat Mettler, Typ DG 111
Phototrode, z. B Fabrikat Mettler, Typ DP 550 und
Kolbenbürette, 20 ml Inhalt für NDSS-Lösung
Kolbenbürette, 10 ml Inhalt für KOH, 0.1 N

3.6 Titrierbecher 100 ml aus Polypropylen

3.7 Titrierglasgefäß, 150 ml Inhalt, verschließbar mit Schnappdeckel

3.8 Erlenmeyerkolben, 100 ml Inhalt, verschließbar mit Schraubverschluß oder NS-Stopfen

3.9 Ultraschallbad

3.10 Druckfiltrationsgerät

3.11 Membranfilter a. Cellulosenitrat, Porengröße 0.1 µm, 47 mm Ø, z. B. Sartorius, Typ 113 58

3.12 Pipetten, 5 ml, 100 ml

**4. Reagenzien:**

4.1 Kalilauge, 0.1 N

4.2 CTAB-Lösung, 0.0151 mol/l
5.50 g CTAB werden in einem Becherglas in ca. 800 ml warmem (ca. 30-40 °C), entmineralisiertem Wasser unter Rühren (Magnetrührer) gelöst, in einem 1 l-Meßkolben überführt, mit entmineralisiertem Wasser nach Abkühlung auf 23-25 °C bis zur Marke aufgefüllt und in eine Vorratsflasche umgefüllt.
**Achtung:**
Aufbewahrung der Lösung und Durchführung der Bestimmung müssen bei ≥ 23 °C erfolgen, da CTAB unterhalb dieser Temperatur auskristallisiert. Die Lösung sollte 10-14 Tage vor Gebrauch hergestellt werden.

4.3 NDSS-Lösung 0.00426 mol/l
1.895 g NDSS (Dioctylnatriumsulfosuccinat) werden in einem Becherglas mit ca. 800 ml entmineralisiertem Wasser versetzt und mit einem Magnetrührer gerührt, bis sich alles gelöst hat. Anschließend wird die Lösung in einem 1 l Meßkolben überführt, mit entmineralisiertem Wasser bis zur Marke aufgefüllt und in eine Vorratsflasche umgefüllt.
NDSS-Lösung wird leicht biologisch abgebaut. Die hergestellte Lösung ist deshalb gut zu verschließen und sollte nicht länger als 3 Monate gelagert werden.
Die Konzentration der CTAB-Lösung ist als exakt angenommen: 0.0151 mol/l.
Die Konzentration der NDSS-Lösung ist täglich durch eine "Blindtitration" zu bestimmen.

**5. Durchführung**

5.1 Blindtitration (Bestimmung der Konzentration der NDSS-Lösung).

5.2 Der Verbrauch an NDSS-Lösung für 5 ml CTAB-Lösung ist 1 x täglich vor jeder Meßreihe zu prüfen (Blindwert).

5.1.2. Genau 5 ml CTAB-Lösung in Titrierbecher pipettieren.

5.1.3. Ca. 50 ml entmineralisiertes Wasser zufügen.

5.1.4. Titration mit dem Titroprozessor bis zum Ende der Titration.
Jede Blindtitration ist als Doppelbestimmung auszuführen, bei nicht übereinstimmenden Werten sind weitere Titrationen durchzuführen, bis die Reproduzierbarkeit der Ergebnisse gegeben ist.

5.2 Adsorption

5.2.1 Die granulierten und krobkörnigen Proben werden in einer Mühle vermahlen. (Das Schlagmesser der Mühle muß bedeckt sein).

5.2.2 Genau 500 mg der vermahlenen Probe auf der Analysenwaage mit einer Genauigkeit von 0.1 mg einwiegen.

5.2.3 Abgewogene Probemenge quantitativ in ein 150 ml-Titriergefäß mit Magnetrührstäbchen überführen.

5.2.4 Genau 100 ml CTAB-Lösung zudosieren, Titriergefäß mit Deckel verschließen und 15 Minuten auf einem Magnetrührer rühren.

5.2.5 Titriergefäß an den Titroprozessor schrauben und pH-Wert der Suspension mit KOH, 0.1 mol/l, auf einen Wert von9,0 $\pm$ 0,05 einstellen.

5.2.6 4 Minuten Behandlung der Suspension im Ultraschallbad.

5.2.7 Filtration durch ein mit Membranfilter bestücktes Druckfilter. Während der Adsorption ist unbedingt darauf zu achten, dass die Temperatur im Bereich von 23 °C und 25 °C gehalten wird.

5.3 Titration

5.3.1 5 ml Filtrat (s. Punkt 5.2.7) in 100 ml Titrierbecher pipettieren und mit entmineralisiertem Wasser auf ca. 50 ml auffüllen.

5.3.2 Titrierbecher an den Titrator schrauben.

5.3.3 Titration mit NDSS-Lösung nach vorgegebener Meßmethode bis zur maximalen Trübung.
Jede Trübung ist als Doppelbestimmung auszuführen, bei nicht übereinstimmenden Werten sind weitere Titrationen durchzuführen, bis die Reproduzierbarkeit der Ergebnisse gegeben ist.

## 6. Berechnung

$$m^2/g = (V_1 - V_2) * \frac{100 * E * 2 * 578.435}{V_1 * 1000}$$

$$m^2/g = (V_1 + V_2) * \frac{115.687 * E}{V_1}$$

$$m^2/g \quad (V_1 + V_2) * \frac{115.687}{V^1} * 5.5$$

| | |
|---|---|
| $V_1$ = | Blindprobe (ml NDSS bei Anwendung von 5 ml CTAB) |
| $V_2$ = | Verbrauch (ml NDSS bei Anwendung von 5 ml Filtrat) |
| E = | Einwaage g CTAB/l (5.5 g) |
| 578.435 = | Platzbedarf von 1 g CTAB in $m^2$. |

Der Meßwert ist üblicherweise korrigiert auf die wasserfreie Substanz anzugeben:

$$m^2/g = \frac{CTAB\ m^2/g * 100}{100 - \%\ H_2O}$$

Weicht der Meßwert der Standardprobe um mehr als 3 ± $m^2/g$ vom Sollwert ab, so ist die gesamte Meßreihe zu wiederholen.

## 7. Anmerkung

zu 1. In der Literatur wird NDSS (Dioctylnatriumsulfosuccinat) auch Aerosol OT genannt.
An den Proben mit einem pH-Wert > 9, wie z. B. Extrusil, wird der pH-Wert gemessen, aber nicht korrigiert, weil die Säure die Oberfläche verändern kann.
Die Phototrode wird vor Beginn der Titration auf 1000 mV eingestellt, entsprechend einer Transparenz von

100 %.

zu 3. Für das Abmessen der vorgegebenen unterschiedlichen Volumina der CTAB-Lösung können auch Dispenser bzw. Kolbenhubpipetten verwendet werden, soweit diese regelmäßig kalibriert werden.

zu 4. Die unter Punkt 4.1 und 4.3 angegebenen Lösungen sind auch als gebrauchsfertige Lösungen zu beziehen.
Lieferant ist z. Z. Firma Kraft, Duisburg.
Telefon: 0203-58-3025.
- Bestell-Nr. 6056.4 CTAb-Lösung 0.0151 ml/l
- Bestell-Nr. 6057.4 NDSS-Lösung 0.00423 mol/l
(in glasflaschen ä 2,5 Liter)

zu 5.2.4 Hydrophobe Proben, die nach dem Rühren nicht benetzt sind, werden vor der Einstellung des pH-Wertes mit einem ULTRA-TURRAX vorsichtig dispergiert, um sie zu benetzen.

zu 5.2.5 Für die Einstellung des pH-Wertes empfiehlt sich die Verwendung eines Titrators. Die Titration wird nach der Endpunktmethode durchgeführt.

zu 5.2.7 Für die Filtration wird Stickstoff aus einer Druckgasflasche verwendet, es ist ein Vordruck von 4-6 bar einzustellen.

zu 6. Bei einer eventuell erforderlichen Wiederholung einer Meßreihe ist insbesondere darauf zu achten, dass auch das für die Einstellung des pH-Wertes verwendete pH-Meter nochmals neu kalibriert wird.

### 1.8 Bestimmung der Wasserdampfaufnahme (Wasserdampfisothermen)

Zur Bestimmung der Wasserdampfaufnahme wird die Probe bei konstanter Temperatur (30 °C) unterschiedlichen relativen Luftfeuchten ausgesetzt. Es wird gewartet, bis sich ein konstantes Gewicht eingestellt hat.
Es wird mit völlig trockener Luft (d. h. Luftfeuchtigkeit näherungsweise gleich Null) gestartet. Nach dem Erreichen des Gleichgewichts wird dieses Gewicht als Bezugspunkt gewählt, d. h. die Wasserdampfaufnahme bei einer höheren Luftfeuchte wird als Differenz zwischen dem Probengewicht in völlig trockener Luft (nach Gleichgewichtseinstellung) und dem Probengewicht in feuchter Luft (nach Gleichgewichtseinstellung) ausgedrückt. Die Luftfeuchtigkeit wird in 10 %-Schritten variiert.
Um Hystereseeffekte auszuschließen, wird sowohl die Wasseradsorption wie auch die Wasserdampfdesorption gemessen.

### Beispiel 1

Die Trocknung und Belegung der Basis Kieselsäure mit Silikonöl (z. B. DOW CORNING (R) 200 FLUID 50 CS, Kohlenstoffgehalt ca. 33 %, Viskosität von 50 mPas) erfolgt über einen Spin-Flash-Trockner. Dann wird die Kieselsäure konditioniert (mindestens 48-stündige Alterung bei Raumtemperatur) bis sie eine Methanolbenetzbarkeit von mindestens 20 % aufweist. Die analytischen Daten der konditionierten Kieselsäure stehen in der Tabelle 1.1.

**Tabelle 1.1**

| Analytische Daten der konditionierten Kieselsäure | | |
|---|---|---|
| Wasser | % | 5,2 |
| pH-Wert | | 6,1 |
| Leitfähigkeit | µS | 41 |
| $N_2$-Oberfläche | $m^2$/ g | 84 |
| CTAB-Oberfläche | $m^2$/ g | 132 |
| Stampfdichte | g/ L | 317 |
| Alpine SR > 180 µm | % | 63 |
| Remission | % | 95,9 |

(fortgesetzt)

| Analytische Daten der konditionierten Kieselsäure | | |
|---|---|---|
| C-Gehalt | % | 4,12 |
| Methanolbenetzbarkeit | % | > 20 |

**Beispiel 2**

Die Basis-Kieselsäure wird im Gericke-Mischer im Masseverhältnis 1:1 mit Silikonöl ( Dimethylpolysiloxan, 50 mPas, z. B. DOW CORNING (R) 200 FLUID 50 CS, Kohlenstoffgehalt ca. 33 %) belegt. Das so entstandene Pulver wird über eine Stunde bei einer Temperatur von 105 °C konditioniert. Dabei entsteht ein Material, das zwar wasserbenetzbar ist, bei dem sich jedoch Kieselsäure und Silikonöl in Wasser nicht mehr voneinander trennen. Durch Mischen dieses Masterbatches mit Filterkuchen der Basis-Kieselsäure entstehen stabile Formulierungen, bei denen sich das Silikonöl nicht mehr vom hydrophilen Filterkuchen abtrennt. Ein so hergestellter hydrophober Masterbatch und ein hydrophiler Filterkuchen werden zusammen in den Spin-Flash-Trockner gefördert, dort vermischt und getrocknet. Die dimethylsiloxanbehandelte Kieselsäure wird durch mindestens 48-stündige (ca. 3 Tage) Alterung bei Raumtemperatur konditioniert, bis sie eine Methanolbenetzbarkeit von mindestens 20 % erreicht hat. Die analytischen Daten der konditionierten Kieselsäure stehen in der Tabelle 2.1.

**Tabelle 2.1**

| Analytische Daten der konditionierten Kieselsäure | | |
|---|---|---|
| Wasser | % | 3,4 |
| pH-Wert | | 6,3 |
| Leitfähigkeit | µS | 100 |
| $N_2$-Oberfläche | $m^2$/ g | 74 |
| CTAB-Oberfläche | $m^2$/ g | 119 |
| DBP-Aufnahme | g/ 100g | 198 |
| Stampfdichte | g/ L | 323 |
| Remission | % | 95,9 |
| C-Gehalt | % | 5,03 |
| Methanolbenetzbarkeit | % | > 20 |

**Beispiel 3**

Die Vorverteilung von Silikonöl (Viskosität von 50 mPas, methylterminiert, z. B. DOW CORNING (R) 200 FLUID 50 CS, Kohlenstoffgehalt ca. 33 %) auf der Kieselsäure (in Form von Filterkuchen) -bei gleichzeitiger Trocknung- erfolgt im Spin-Flash-Trockner. Die dimethylsiloxanbehandelte Kieselsäure wird durch eine 48-stündige (ca. 3 Tage) Alterung bei Raumtemperatur konditioniert, bis sie eine Methanolbenetzbarkeit von mindestens 20 % erreicht hat. Die analytischen Daten der konditionierten Kieselsäure stehen in der Tabelle 3.1.

**Tabelle 3.1**

| Analytische Daten der konditionierten Kieselsäure | | |
|---|---|---|
| Wasser | % | 5,2 |
| pH-Wert | | 6,1 |
| Leitfähigkeit | µS | 41 |
| $N_2$-Oberfläche | $m^2$/ g | 84 |
| CTAB-Oberfläche | $m^2$/ g | 132 |
| Stampfdichte | g/ L | 317 |

(fortgesetzt)

| Analytische Daten der konditionierten Kieselsäure | | |
|---|---|---|
| Remission | % | 95,9 |
| C-Gehalt | % | 4,12 |
| Methanolbenetzbarkeit | % | > 20 |

**Beispiel 4**

Die Basis-Kieselsäure wird im Gericke-Mischer im Masseverhältnis 1 : 1 mit Silikonöl (Dimethylpolysiloxan 50 mPas, mit Trimethylsilyl-Gruppen terminiert, z. B. DOW CORNING (R) 200 FLUID 50 CS, Kohlenstoffgehalt ca. 33 %) belegt. Das so entstandene Pulver wird über eine Stunde bei einer Temperatur von 105 °C konditioniert. Dabei entsteht ein Material, das zwar wasserbentzbar ist, bei dem sich jedoch Kieselsäure und Silikonöl in Wasser nicht mehr voneinander trennen. Durch Mischen dieses Masterbatches (d. h. 50 % Kieselsäure und 50 % Silikonöl) mit wässrigen Kieselsäuredispersionen entstehen stabile Suspensionen, bei denen sich das Silikonöl nicht mehr von der Kieselsäure abtrennt. Die Gesamtmischung enthält typischerweise 1 Gewichtsteil Silikonöl, ca. 4-8 Gewichtsteile Kieselsäure und 20-6 Gewichtsteile Wasser. Zur Herstellung einer solchen Suspension wird der Masterbatch (d. h. 50 % Kieselsäure und 50 % Silikonöl) mit ca. der 14-16 fachen Menge an Filterkuchen (Feststoffgehalt ca. 20 %) und ca. der 11-13-fachen Menge mit zusätzlichem Wasser intensiv gemischt. Die analytischen Daten der Suspension stehen in Tabelle 4.1, die analytischen Daten der entsprechenden konditionierten Kieselsäure stehen in Tabelle 4.2.

**Tabelle 4.1**

| Suspensionsdaten | | |
|---|---|---|
| Feststoffgehalt | % | 12,8 |
| pH-Wert | | 5,2 |
| Leitfähigkeit | µS | 382 |
| Viskosität | mPas | 183 |

Die Trocknung der Suspension erfolgt über einen Sprühtrockner. Die dimethylsiloxanbehandelte Kieselsäure wird durch eine 48-stündige (ca. 3 Tage) Alterung bei Raumtemperatur konditioniert, bis sie eine Methanolbenetzbarkeit von mindestens 20 % erreicht hat. Die analytischen Daten der konditionierten Kieselsäure stehen in der Tabelle 4.2.

**Tabelle 4.2**

| Analytische Daten der konditionierten Kieselsäure | | |
|---|---|---|
| Glühverlust | % | 12,4 |
| Wasser | % | 2,2 |
| pH-Wert | | 6,4 |
| Leitfähigkeit | µS | 135 |
| $N_2$-Oberfläche | $m^2$/ g | 80 |
| CTAB-Oberfläche | $m^2$/ g | 131 |
| DBP-Aufnahme | g/ 100g | 236 |
| Stampfdichte | g/ L | 256 |
| Remission | % | 94,5 |
| C-Gehalt | % | 4,21 |
| Methanolbenetzbarkeit | % | > 20 % |

**Beispiel 5**

In eine Kieselsäuresuspension der Basiskieselsäure (12,8 % Feststoffgehalt) wird mit Hilfe eines stark scherenden Mischaggregat Silikonöl (Polydimethylsiloxan methylterminiert, 50 mPas, z. B. DOW CORNING (R) 200 FLUID 50 CS, Kohlenstoffgehalt ca. 33 %) suspendiert. Die Verteilung des Silikonöls in der Kieselsäuresuspension wird durch eine sofortige Sprühtrocknung konserviert. Die dimethylsiloxanbehandelte Kieselsäure wird durch eine 48-sündige (ca. 3 Tage) Alterung bei Raumtemperatur konditioniert, bis sie eine Methanolbenetzbarkeit von mindestens 20 % erreicht hat. Die analytischen Daten der konditionierten Kieselsäure stehen in der Tabelle 5.1.

**Tabelle 5.1**

| Analytische Daten der konditionierten Kieselsäure | | |
|---|---|---|
| Glühverlust | % | 13,0 |
| Wasser | % | 2,2 |
| pH-Wert | | 5,5 |
| Leitfähigkeit | $\mu$S | 100 |
| $N_2$-Oberfläche | $m^2$/ g | 85 |
| CTAB-Oberfläche | $m^2$/ g | 137 |
| DBP-Aufnahme | g/ 100g | 253 |
| Stampfdichte | g/ L | 270 |
| Remission | % | 94,2 |
| C-Gehalt | % | 4,78 |
| Methanolbenetzbarkeit | % | > 20 % |

**Patentansprüche**

**1.** Hydrophobe Fällungskieselsäuren,
**gekennzeichnet durch** die folgenden Eigenschaften:

- Kohlenstoffgehalt 1,0 - 8,0 %
- Methanolbenetzbarkeit 20 - 55 %
- Remissionswert > 94 %
- Verhältnis von BET/CTAB ≤ 1
- DBP-Aufnahme < 250 g/100 g
- BET-Oberfläche 50 - 110 $m^2$/g
- CTAB-Oberfäche 100 -150 $m^2$/g
- Searszahl < 13.

**2.** Hydrophobe Fällungskieselsäure nach Anspruch 1,
**gekennzeichnet durch** eine mittlere Teilchengröße von 2 - 30 $\mu$m.

**3.** Hydrophobe Fällungskieselsäure nach Anspruch 1 oder 2,
**gekennzeichnet durch** einen pH-Wert von 5-9.

**4.** Hydrophobe Fällungskieselsäure nach einem der Ansprüche 1 bis 3,
**gekennzeichnet durch** einen Wassergehalt von < 7.

**5.** Hydrophobe Fällungskieselsäure nach einem der Ansprüche 1 bis 4,
**gekennzeichnet durch** eine Leitfähigkeit von < 200 $\mu$S.

**6.** Hydrophobe Fällungskieselsäure nach einem der Ansprüche 1 bis 5,
**gekennzeichnet durch** einen Glühverlust von 3 bis 14 %.

7. Verfahren zur Herstellung hydrophober Fällungskieselsäure gemäß einem der Ansprüche 1 bis 6,
**dadurch gekennzeichnet,**
**dass**

a) eine Mischung aus einem Organopolysiloxanderivat und einer Fällungskieselsäure hergestellt wird und
b) eine Konditionierung der Mischung für einen Zeitraum von 0,5 bis 72 h bei 10 bis 150 °C

durchgeführt wird.

8. Verfahren nach Anspruch 7,
**dadurch gekennzeichnet,**
**dass** Verfahrensschritt a) durch Zugabe des Organopolysiloxanderivats auf eine Fällungskieselsäure mit einem Wasseranteil von 1 bis 80 % erfolgt.

9. Verfahren nach Anspruch 7,
**dadurch gekennzeichnet,**
**dass** Verfahrensschritt a) durch Zugabe des Organopolysiloxanderivats auf eine Fällungskieselsäure mit einem Wasseranteil von 70 bis 99 % bei anschließender Trennung des Feststoffs von Wasser erfolgt.

10. Verfahren nach einem der Ansprüche 7 bis 9,
**dadurch gekennzeichnet,**
**dass** Verfahrensschritt a) durch gleichzeitiges Zuführen einer Fällungskieselsäure oder wasserhaltiger Fällungskieselsäure und eines Organopolysiloxanderviats in einen Spin-Flash-Trockner erfolgt.

11. Verfahren nach einem der Ansprüche 7 bis 9,
**dadurch gekennzeichnet,**
**dass** Verfahrensschritt a) durch Mischen einer Fällungskieselsäure mit einer bereits konditionierten Fällungskieselsäure, erhalten nach dem Verfahrensschritt a) und b), durchgeführt wird.

12. Verfahren nach Anspruch 7 bis 11,
**dadurch gekennzeichnet,**
**dass** einer der Verfahrensschritte a) oder b) mehrmals hintereinander durchgeführt wird.

13. Verfahren nach einem der Ansprüchen 7 bis 12,
**dadurch gekennzeichnet,**
**dass** die Verfahrensschritte a) und b) mehrmals hintereinander durchgeführt werden.

14. Verfahren nach einem der Ansprüche 7 bis 13,
**dadurch gekennzeichnet,**
**dass** Verfahrensschritt b) durch eine 0,5 bis 2-stündige Wärmebehandlung bei 100 bis 150 °C erfolgt.

15. Verfahren nach einem der Ansprüche 7 bis 13,
**dadurch gekennzeichnet,**
**dass** Verfahrensschritt b) durch eine mindestens 48-stündige Lagerung bei Raumtemperatur erfolgt.

16. Verwendung der hydrophoben Fällungskieselsäuren nach einem der Ansprüche 1 bis 6 in Silikonkautschukformulierungen.

17. Verwendung der hydrophoben Fällungskieselsäuren nach einem der Ansprüche 1 bis 6 in Entschäumern.

18. Verwendung der hydrophoben Fällungskieselsäuren nach einem der Ansprüche 1 bis 6 in Free-flow-Hilfsmitteln.

19. Verwendung der hydrophoben Fällungskieselsäuren nach einem der Ansprüche 1 bis 6 in als Füllstoff in Polymeren.

20. Verwendung der hydrophoben Fällungskieselsäuren nach einem der Ansprüche 1 bis 6 in als Füllstoff in Elastomerenmischungen, Reifen oder Dichtungsmassen.

21. Verwendung der hydrophoben Fällungskieselsäure nach einem der Ansprüche 1 bis 6 als Trägersubstanz.

**22.** Verwendung der hydrophoben Fällungskieselsäure nach einem der Ansprüche 1 bis 6 als Emulgierhilfsmittel.

**23.** Verwendung der hydrophoben Fällungskieselsäure nach einem der Ansprüche 1 bis 6 als Antiblocking Hilfsmittel.

**24.** Verwendung der hydrophoben Fällungskieselsäure nach einem der Ansprüche 1 bis 6 als Pigment.

**25.** Verwendung der hydrophoben Fällungskieselsäure nach einem der Ansprüche 1 bis 6 als Insektizid.

## Claims

**1.** Hydrophobic precipitated silica **characterized by** the following properties:

- carbon content 1.0-8.0%
- methanol wettability 20-55%
- reflectance >94%
- BET/CTAB ratio ≤1
- DBP absorption <250 g/100 g
- BET surface area 50-110 $m^2/g$
- CTAB surface area 100-150 $m^2/g$
- Sears number <13.

**2.** Silica according to Claim 1, **characterized by** an average particle size of 2-30 µm.

**3.** Silica according to Claim 1 or 2, **characterized by** a pH of 5-9.

**4.** Silica according to any of Claims 1 to 3, **characterized by** a water content of <7%.

**5.** Silica according to any of Claims 1 to 4, **characterized by** a conductivity of <200 µS.

**6.** Silica according to any of Claims 1 to 5, **characterized by** a loss on ignition of 3 to 14%.

**7.** Process for preparing hydrophobic precipitated silica according to one of Claims 1 to 6, **characterized in that**

a) a mixture of an organopolysiloxane derivative and a precipitated silica is prepared, and
b) the mixture is conditioned for a period of from 0.5 to 72 h at from 10 to 150°C.

**8.** Process according to Claim 7, **characterized in that** step a) takes place by adding the organopolysiloxane derivative to a precipitated silica having a water content of from 1 to 80%.

**9.** Process according to Claim 7, **characterized in that** step a) takes place by adding the organopolysiloxane derivative to a precipitated silica having a water content of from 70 to 99%, with subsequent isolation of the solid from the water.

**10.** Process according to any of Claims 7 to 9, **characterized in that** step a) takes place by simultaneously supplying a precipitated silica or hydrous precipitated silica and an organopolysiloxane derivative to a spin-flash drier.

**11.** Process according to any of Claims 7 to 9, **characterized in that** step a) is carried out by mixing a precipitated silica with a ready-conditioned precipitated silica obtained according to steps a) and b).

**12.** Process according to any of Claims 7 to 11, **characterized in that** one of the steps a) and b) is carried out a number of times in succession.

**13.** Process according to any of Claims 7 to 12, **characterized in that** steps a) and b) are carried out a number of times in succession.

**14.** Process according to any of Claims 7 to 13, **characterized in that** step b) takes place by heat treatment at from 100 to 150°C for from 0.5 to 2 hours.

15. Process according to any of Claims 7 to 13, **characterized in that** step b) takes place by storage at room temperature for at least 48 hours.

16. Use of the silica according to any of Claims 1 to 6 in silicone rubber formulations.

17. Use of the silica according to any of Claims 1 to 6 in defoamers.

18. Use of the silica according to any of Claims 1 to 6 in free-flow auxiliaries.

19. Use of the silica according to any of Claims 1 to 6 as a filler in polymers.

20. Use of the silica according to any of Claims 1 to 6 as a filler in elastomer mixtures, tires or sealants.

21. Use of the silica according to any of Claims 1 to 6 as a carrier substance.

22. Use of the silica according to any of Claims 1 to 6 as emulsifying auxiliary.

23. Use of the silica according to any of Claims 1 to 6 as an antiblocking auxiliary.

24. Use of the silica according to any one of Claims 1 to 6 as a pigment.

25. Use of the silica according to any of Claims 1 to 6 as an insecticide.

## Revendications

1. Silices de précipitation hydrophobes, **caractérisées par** les propriétés suivantes:

- teneur en carbone 1,0 - 8,0 %
- mouillabilité au méthanol 20 - 55 %
- réflectance > 94 %
- rapport de BET/CTAB ≤ 1
- absorption de DBP < 250 g/100 g
- surface BET 50 - 110 $m^2/g$
- surface CTAB 100 - 150 $m^2/g$
- indice de Sears < 13.

2. Silice de précipitation hydrophobe selon la revendication 1, **caractérisée par** une granulométrie moyenne de 2 à 30 µm.

3. Silice de précipitation hydrophobe selon la revendication 1 ou 2, **caractérisée par** un pH de 5 à 9.

4. Silice de précipitation hydrophobe selon l'une quelconque des revendications 1 à 3, **caractérisée par** une teneur en eau inférieure à 7.

5. Silice de précipitation hydrophobe selon l'une quelconque des revendications 1 à 4, **caractérisée par** une conductivité inférieure à 200 µS.

6. Silice de précipitation hydrophobe selon l'une quelconque des revendications 1 à 5, **caractérisée par** une perte par calcination de 3 à 14 %.

7. Procédé de préparation de silice de précipitation hydrophobe selon l'une quelconque des revendications 1 à 6, **caractérisé en ce que**

a) un mélange d'un dérivé d'organopolysiloxane et d'une silice de précipitation est préparé, et
b) un conditionnement du mélange est réalisé pendant une période de 0,5 à 72 heures entre 10 et 150°C.

8. Procédé selon la revendication 7, **caractérisé en ce que** l'étape de procédé a) est réalisée par l'addition du dérivé

d'organopolysiloxane à une silice de précipitation présentant une proportion d'eau de 1 à 80 %.

9. Procédé selon la revendication 7, **caractérisé en ce que** l'étape de procédé a) est réalisée par l'addition du dérivé d'organopolysiloxane à une silice de précipitation présentant une proportion d'eau de 70 à 99 % avec une séparation subséquente du solide de l'eau.

10. Procédé selon l'une quelconque des revendications 7 à 9, **caractérisé en ce que** l'étape de procédé a) est réalisée par l'apport simultané d'une silice de précipitation ou d'une silice de précipitation hydratée et d'un dérivé d'organopolysiloxane dans un sécheur spin-flash.

11. Procédé selon l'une quelconque des revendications 7 à 9, **caractérisé en ce que** l'étape de procédé a) est réalisée en mélangeant une silice de précipitation avec une silice de précipitation déjà conditionnée, obtenue conformément aux étapes de procédé a) et b).

12. Procédé selon les revendications 7 à 11, **caractérisé en ce qu'**une étape de procédé a) ou b) est réalisée plusieurs fois successivement.

13. Procédé selon l'une quelconque des revendications 7 à 12, **caractérisé en ce que** les étape de procédé a) et b) sont réalisées plusieurs fois successivement.

14. Procédé selon l'une quelconque des revendications 7 à 13, **caractérisé en ce que** l'étape de procédé b) est réalisée par un traitement thermique pendant de 0,5 à 2 heures à une température comprise entre 100 et 150°C.

15. Procédé selon l'une quelconque des revendications 7 à 13, **caractérisé en ce que** l'étape de procédé b) est réalisée par un stockage pendant au moins 48 heures à la température ambiante.

16. Utilisation des silices de précipitation hydrophobes selon l'une quelconque des revendications 1 à 6 dans des formulations de caoutchouc siliconé.

17. Utilisation des silices de précipitation hydrophobes selon l'une quelconque des revendications 1 à 6 dans des antimousses.

18. Utilisation des silices de précipitation hydrophobes selon l'une quelconque des revendications 1 à 6 dans des auxiliaires d'écoulement libre.

19. Utilisation des silices de précipitation hydrophobes selon l'une quelconque des revendications 1 à 6 en tant que charge dans des polymères.

20. Utilisation des silices de précipitation hydrophobes selon l'une quelconque des revendications 1 à 6 en tant que charge dans des mélanges d'élastomères, des pneus or des matières d'étanchéité.

21. Utilisation des silices de précipitation hydrophobes selon l'une quelconque des revendications 1 à 6 en tant que substance de support.

22. Utilisation des silices de précipitation hydrophobes selon l'une quelconque des revendications 1 à 6 en tant qu'auxiliaire d'émulsification.

23. Utilisation des silices de précipitation hydrophobes selon l'une quelconque des revendications 1 à 6 en tant qu'auxiliaire d'anti-adhérence.

24. Utilisation des silices de précipitation hydrophobes selon l'une quelconque des revendications 1 à 6 en tant que pigment.

25. Utilisation des silices de précipitation hydrophobes selon l'une quelconque des revendications 1 à 6 en tant qu'insecticide.

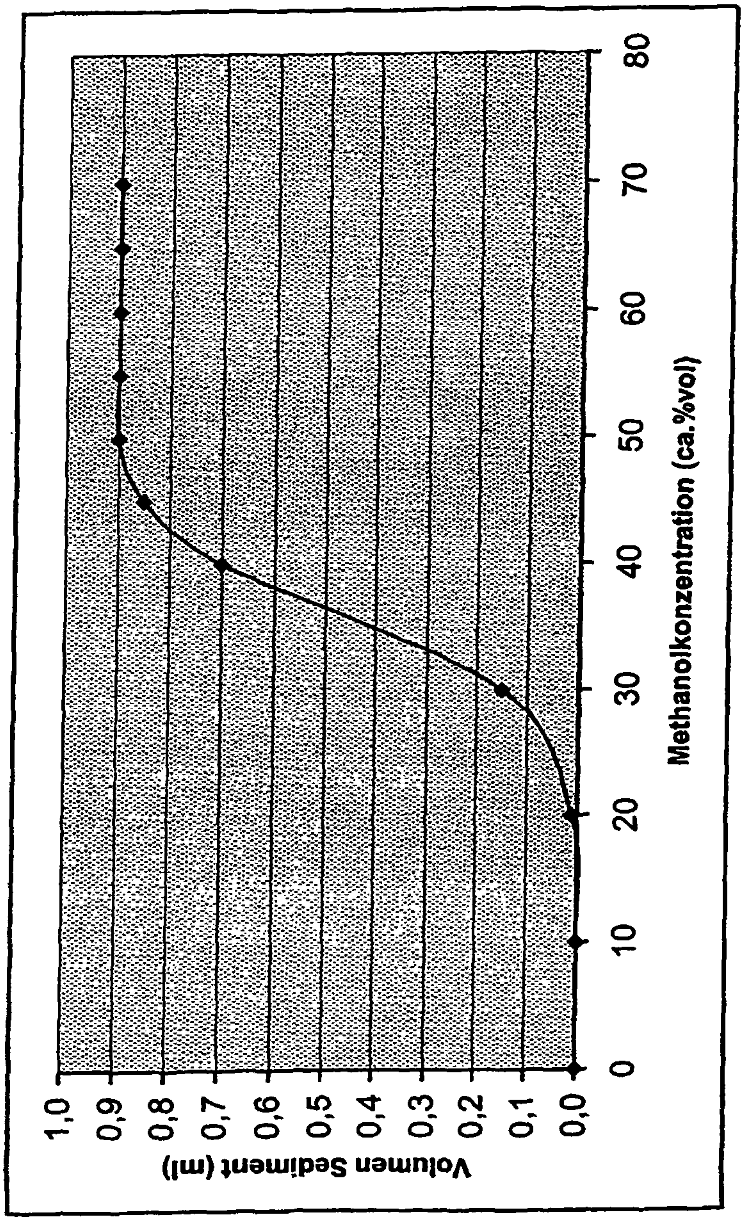
Volumen Sediment (ml)
1,0
0,9
0,8
0,7
0,6
0,5
0,4
0,3
0,2
0,1
0,0
0
10
20
30
40
50
60
70
80
Methanolkonzentration (ca.%vol)

Fig. 1

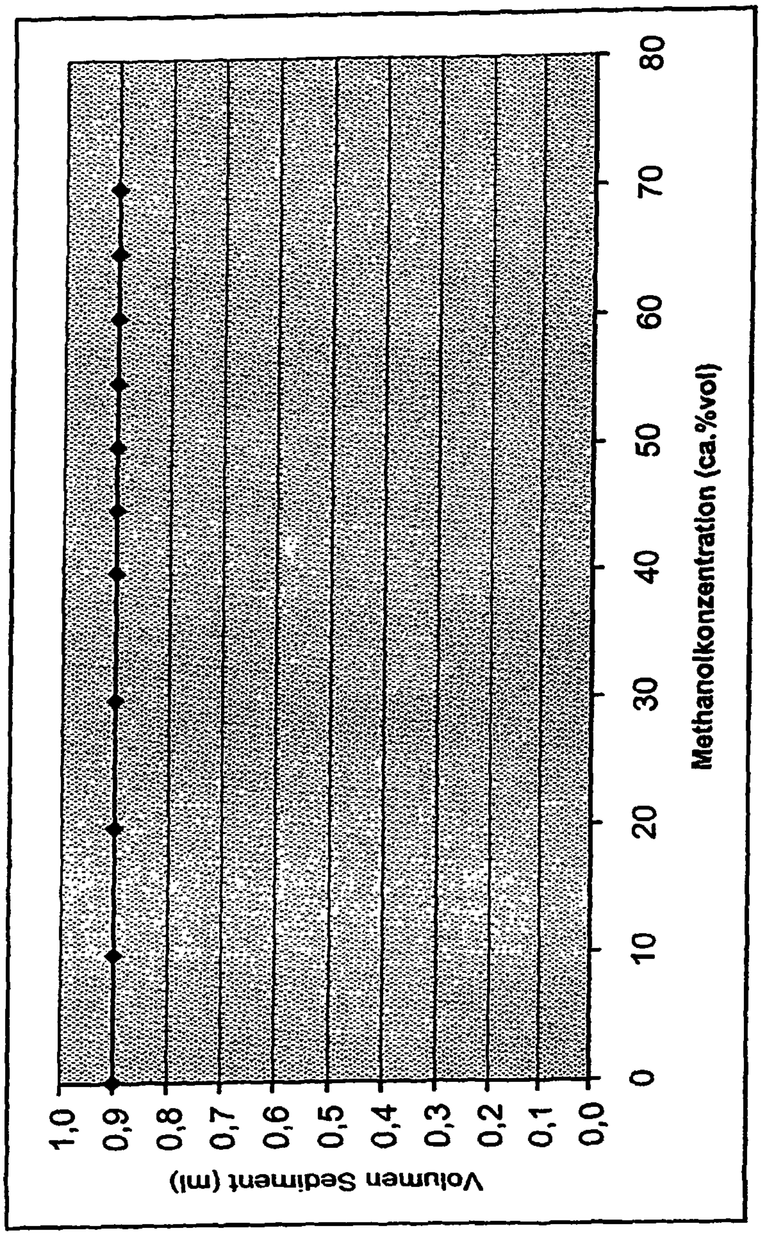
Volumen Sediment (ml)
1,0
0,9
0,8
0,7
0,6
0,5
0,4
0,3
0,2
0,1
0,0
0
10
20
30
40
50
60
70
80
Methanolkonzentration (ca.%vol)

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3085905
- DE 2435860
- DE 2242728
- DE 2513608
- DE 2628975
- DE 2729244
- DE 2829906
- US 4377493 A
- DE 3411759
- US 4344858 A
- WO 9505880 A